**Europäisches Patentamt**

**European Patent Office**

**Office européen des brevets**

(19)

(11) Veröffentlichungsnummer: **0 162 957**
**B1**

(12) **EUROPÄISCHE PATENTSCHRIFT**

(45) Veröffentlichungstag der Patentschrift:
**09.03.88**

(21) Anmeldenummer: **84114963.6**

(22) Anmeldetag: **08.12.84**

(51) Int. Cl.⁴: **G 01 L 3/10**

(54) **Verfahren zum Messen einer mechanischen Spannung an einer Welle.**

(30) Priorität: **03.03.84 DE 3407917**

(43) Veröffentlichungstag der Anmeldung:
**04.12.85 Patentblatt 85/49**

(45) Bekanntmachung des Hinweises auf die Patenterteilung:
**09.03.88 Patentblatt 88/10**

(84) Benannte Vertragsstaaten:
**DE FR GB IT SE**

(56) Entgegenhaltungen:
**DE - A - 2 939 566**
**US - A - 3 861 206**

(73) Patentinhaber: **VACUUMSCHMELZE GMBH, Grüner
Weg 37 Postfach 2253, D-6450 Hanau 1 (DE)**

(72) Erfinder: **Boll, Richard, Dr., Kreuzstrasse 25,
D-6052 Mühlheim (DE)**
Erfinder: **Friedrichs, Michael,
Katharina-Belgica-Strasse 3a, D-6450 Hanau 1 (DE)**

## Beschreibung

Die Erfindung betrifft ein Verfahren und eine Messeinrichtung zum Messen einer mechanischen Spannung an einer Welle mittels eines Messwertaufnehmers unter Ausnutzung der magnetostriktiven Eigenschaften eines auf der Welle angeordneten Magnetmaterials, wobei sich zwischen der Oberfläche der Welle und dem Magnetmaterial ein unmagnetisches Material befindet.

Ein Verfahren zur berührungslosen Messung von Drehmomenten an einer rotierenden Welle ist beispielsweise aus der US-PS 3 861 206 bekannt. Das Messprinzip beruht auf einer Änderung der Permeabilität eines sich auf der Wellenoberfläche befindlichen magnetostriktiven Materials in Abhängigkeit von mechanischen Belastungen oder Beanspruchungen. Die Permeabilitätsänderung der ferromagnetischen Wellenoberfläche wird berührungslos von einem Messkopf erfasst, wobei das Ausgangssignal als Mass für das auf die Welle wirkende Drehmoment dient. Das bekannte Verfahren sieht hierzu vor, dass auf die mit einem Film aus einem nichtmagnetischen Werkstoff versehene Oberfläche der Welle ein weiterer Film aus einem magnetostriktiven Material aufgebracht wird. Ein weiteres magnetostriktives Messverfahren sowie die dazugehörige Messeinrichtung sind aus der DE-OS 2939566 bekannt. Auch hierbei wird die der Messung zugrundeliegende drehmomentübertragende Welle mit einer hochpermeablen Schicht umhüllt oder beschichtet. Zwischen der hochpermeablen Schicht kann ferner eine magnetisch nichtleitende Schicht angeordnet sein.

Bei diesen bekannten Verfahren zur Drehmomentmessung ist jedoch das direkte Aufbringen der unmagnetischen und/oder der magnetischen Schicht auf die Wellenoberfläche ein sehr aufwendiger Fertigungsschritt. Hinzu kommt, dass das auf der Welle aufgebrachte magnetostriktive Material zur Erhöhung der Messempfindlichkeit unbedingt einer Wärmebehandlung unterzogen werden muss. Durch die Wärmebehandlung der gesamten Welle verändern sich jedoch die mechanischen Eigenschaften der Wellenoberfläche in unerwünschter Weise, was z.B. zu einer verringerten Lebensdauer der Welle führen kann.

Aufgabe der vorliegenden Erfindung ist es, bei einem Messverfahren der eingangs genannten Art die Messempfindlichkeit und die Linearität des drehmomentabhängigen Ausgangssignals zu erhöhen. Gleichzeitig soll eine Belastung der Welle durch eine nachträgliche Wärmebehandlung möglichst vermieden werden.

Dies wird durch ein Verfahren nach dem Anspruch 1 oder durch eine Messeinrichtung nach dem Anspruch 2 erreicht.

Im Gegensatz zu den Verfahren und Messeinrichtungen nach dem Stand der Technik kann die mit Magnetmaterial beschichtete Trägerhülse aus unmagnetischem Material als selbständige konstruktive Einheit zur Optimierung der Eigenschaften des Magnetmaterials einer getrennten Wärmebehandlung unterzogen werden, ohne die Eigenschaften des hochvergüteten Wellenmaterials nachteilig zu beeinflussen. Durch die optimale Ausnutzung des wärmebehandelten Magnetmaterials wird vor allem die Signalempfindlichkeit des Ausgangssignals erheblich erhöht. Ferner kann die wärmebehandelte Trägerhülse jederzeit einer anwendungsnahen Prüfung, beispielsweise hinsichtlich der Empfindlichkeit und der Linearität der Torduktorkennlinie unterzogen werden, bevor die Trägerhülse auf der Welle befestigt wird. Mit der magnetisch nichtleitenden Trägerhülse wird zudem durch deren Abschirmwirkung eine Entkopplung von der gegebenenfalls ferromagnetischen Welle und eine Linearisierung des Ausgangssignals erreicht. Schliesslich vereinfacht die Verwendung einer mit Magnetmaterial beschichteten unmagnetischen Trägerhülse sowohl die Montage des Drehmomentsensors als auch einen gegebenenfalls erforderlich werdenden Austausch.

Anhand der in zwei Figuren gezeigten Ausführungsbeispiele wird die Erfindung nachstehend noch näher erläutert.

Figur 1 zeigt schematisch eine auf einer Welle befestigte Trägerhülse mit magnetischer Schicht.

Figur 2 zeigt schematisch die Ausgangssignalempfindlichkeit als Funktion des Drehmoments M.

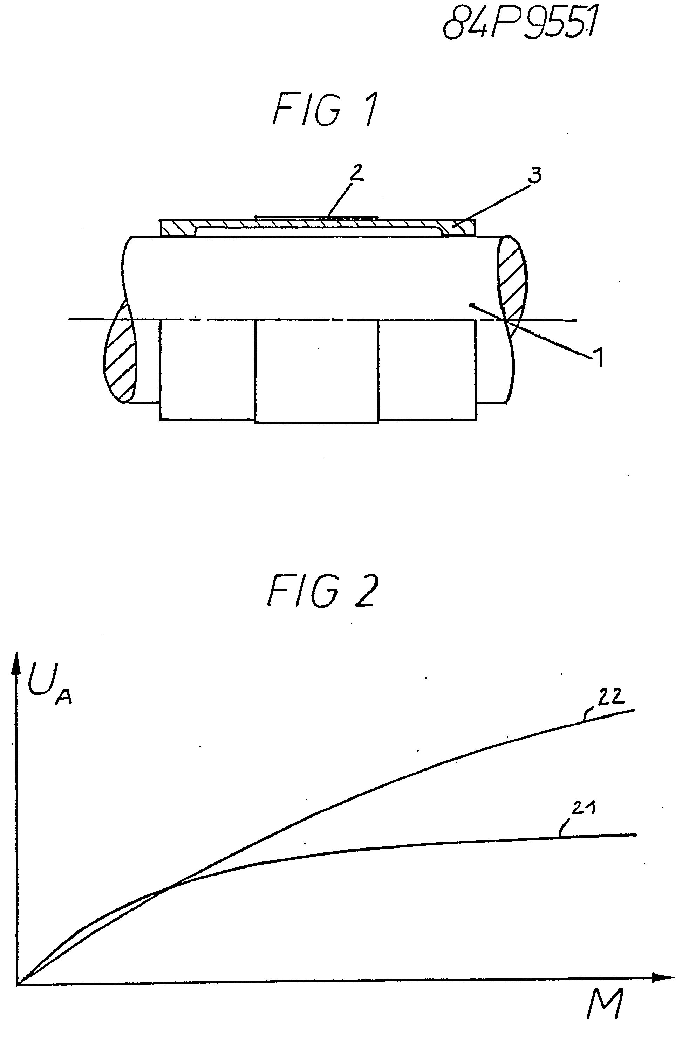

Bei der in Figur 1 vereinfacht dargestellten Ausführungsform ist die drehmomentübertragende Welle, z.B. eine Getriebewelle eines Kraftfahrzeuges, mit 1 bezeichnet. Die mit einem Band bzw. einer Folie aus einem hochpermeablen Magnetmaterial 2 beschichtete unmagnetische Trägerhülse 3 ist auf der Oberfläche der Welle 1 befestigt. Nicht näher dargestellt sind Messwertaufnehmer sowie Verstärkung und Anzeige des drehmomentabhängigen Ausgangssignals.

Für die unmagnetische Trägerhülse 3 kommen insbesondere Werkstoffe in Frage, die einen erheblich kleineren Elastizitätsmodul aufweisen als die Stahllegierung, aus der üblicherweise oberflächengehärtete hochvergütete Wellen bestehen. Neben hochfesten Kunststoffen sind insbesondere aushärtbare Kupferlegierungen, beispielsweise eine Kupferlegierung mit etwa 0,3 bis 2 Gew.% Beryllium, Messing, Kobaltbasislegierungen und Aluminiumlegierungen besonders geeignet.

Beim serienmässigen Einsatz von Messeinrichtungen nach der Erfindung, z.B. zur exakten Drehmomenterfassung bei automatischen Getrieben, kommt es darauf an, die mit Magnetmaterial 2 beschichtete Trägerhülse 3 möglichst ohne grossen Aufwand auf die Welle 1 aufzubringen. Eine insbesondere wegen ihres einfachen Aufbaues bevorzugte Ausführungsform des erfindungsgemässen Drehmomentsensors ist daher derart ausgebildet, dass die Trägerhülse 3 mindestens einen zur Wellenachse parallelen Längsschlitz aufweist. Eine solche Trägerhülse erleichtert zusätzlich die Montage auf der Wellenoberfläche in besonders vorteilhafter Weise.

Im ersten Fertigungsschritt wird zunächst die Oberfläche der Trägerhülse 3 mit Magnetmaterial 2 beschichtet. Hierzu wird ein streifenförmiges Band aus einer hochpermeablen Magnetlegierung mit einer geeigneten Verbindungstechnik auf der Oberfläche der Trägerhülse 3 befestigt. Dies kann beispielsweise durch Kleben oder Schweissen erfolgen. Besonders günstige Ergebnisse ergaben kombinierte Schweiss-Klebe-Verbindungen, wobei zunächst alle Bandenden des Magnetmaterials 2 auf der Oberfläche der Trägerhülse 3 fixiert und dann mit Quer- und Umlaufnähten punktgeschweisst wurden. Für das Punktschweissen wurde ein Neodym-YAG-Laser verwendet, wobei die Pulslänge von 0,2 bis 0,6 ms bei einer Pulsrate von 20 Hz eingestellt wurde.

Als Magnetmaterial 2 haben sich insbesondere amorphe Legierungen als besonders günstig erwiesen, da diese sowohl hochpermeabel als auch mechanisch hoch belastbar sind. Amorphe Magnetlegierungen lassen sich bekanntlich dadurch herstellen, dass man eine entsprechende Schmelze so rasch abkühlt, dass ein Erstarren ohne Kristallisation eintritt. Die Legierungen können dabei gleich bei ihrer Entstehung in Form dünner Bänder gewonnen werden, deren Dicke beispielsweise einige hundertstel Millimeter und deren Breite einige Millimeter bis zu mehreren Zentimetern betragen kann. Bekannte amorphe weichmagnetische Metallegierungen haben eine Zusammensetzung, die durch die Formel $M_yX_{100-y}$ dargestellt werden kann, wobei M wenigstens eines der Metalle Eisen, Kobalt und Nickel und X wenigstens eines der sogenannten glasbildenden Elemente Bor, Kohlenstoff, Silizium und Phosphor bedeutet und y zwischen etwa 70 und 90% liegt. Zusätzlich zu den Metallen M können diese amorphen Legierungen noch bis zu 4 Atom% mindestens eines der Metalle aus der Gruppe Chrom, Molybdän, Wolfram, Vanadium Niob, Tantal, Titan, Zirkon, Hafnium und Mangan enthalten. Ferner können zusätzlich zu den glasbildenden Elementen X oder gegebenenfalls auch anstelle von diesen die Elemente Aluminium, Gallium, Indium, Germanium, Zinn, Blei, Arsen, Antimon, Wismut oder Beryllium vorhanden sein.

Besonders geeignet unter den amorphen Magnetlegierungen sind solche auf Kobaltbasis mit einer Sättigungsmagnetostriktion $\lambda_s$ von $-8 \cdot 10^{-6}$ bis $+8 \cdot 10^{-6}$, z.B. Legierungen der Zusammensetzung $Co_{62}Ni_{15}Si_8B_{15}$ oder $Co_{75}Si_{15}B_{10}$, wobei die Indizes den Gehalt der jeweiligen Legierungen an den entsprechenden Elementen in Atom-% angeben. Obwohl amorphe Magnetlegierungen bereits nach ihrer Herstellung durch rasches Abkühlen einer Schmelze ausreichende magnetische Eigenschaften aufweisen, können diese durch Wärmebehandlungen zwischen der jeweiligen Curietemperatur und der jeweiligen Kristallisationstemperatur erheblich verbessert werden, d.h., die Koerzitivfeldstärke abgesenkt und die Permeabilität erhöht werden.

Auf einer 60 mm breiten Trägerhülse 3 aus einer ausgehärteten Kupfer-Beryllium-Legierung mit etwa 2 Gew.% Beryllium wurde ein 25 mm breites und etwa 0,035 mm dickes streifenförmiges Band aus der amorphen Magnetlegierung $Co_{62}Ni_{15}Si_8B_{15}$ befestigt. Anschliessend wurden über die gesamte Fläche des Bandes rasterförmig verteilte Schweisspunkte angebracht. Nach der Beschichtung der Trägerhülse 3 mit dem Magnetmaterial 2 wurde diese Anordnung einer einstündigen Wärmebehandlung im Magnetfeld zur Optimierung der Eigenschaften der Magnetschicht im Temperaturbereich von 300 bis 400 °C unterzogen. Nach der Überprüfung der Empfindlichkeit und der Linearität der Torduktorkennlinie wurde die Trägerhülse 3 auf der Oberfläche der Welle 1 befestigt.

Einen qualitativen Vergleich zwischen einem Drehmomentsensor mit einer direkt auf eine Stahlwelle aufgebrachten Schicht aus amorphem Magnetmaterial (Kurve 21) und einem Drehmomentsensor gemäss der Erfindung, bei der das Magnetmaterial auf einer unmagnetischen Trägerhülse 3 befestigt ist (Kurve 22), ist in der Figur 2 dargestellt. Die Empfindlichkeit der Ausgangsspannung $U_A$ ist bei Verwendung einer mit Magnetmaterial 2 beschichteten Trägerhülse 3 insbesondere im Bereich mittlerer und höherer Drehmomente wesentlich grösser und ausserdem ist die Kennlinie linearer.

Die Signalaufbereitung kann in bekannter Weise, beispielsweise nach dem in der DE-OS 2939566 beschriebenen Verfahren erfolgen. Es können aber auch andere geeignete Verfahren verwendet werden, mit denen ein drehmomentabhängiges Signal messbar ist.

**Patentansprüche**

1. Verfahren zum Messen einer mechanischen Spannung an einer Welle (1) mittels eines Messwertaufnehmers unter Ausnutzung der magnetostriktiven Eigenschaften eines auf der Welle angeordneten Magnetmaterials (2), wobei sich zwischen der Oberfläche der Welle (1) und dem Magnetmaterial (2) ein unmagnetisches Material (3) befindet, dadurch gekennzeichnet, dass
– das Magnetmaterial (2) zunächst auf der Oberfläche einer unmagnetischen Trägerhülse (3) befestigt wird,
– die Trägerhülse (3) mit dem Magnetmaterial (2) dann auf die Welle (1) aufgebracht und mit dieser kraftschlüssig verbunden wird.

2. Magnetostriktive Messeinrichtung mit einem Magnetaufnehmer an einem auf einer Welle (1) angeordneten Magnetmaterial (2), wobei sich zwischen der Oberfläche der Welle (1) und dem Magnetmaterial (2) ein unmagnetisches Material (3) befindet, dadurch gekennzeichnet, dass das unmagnetische Material (3) einen gegenüber dem Wellenmaterial kleineren Elastizitätsmodul aufweist und in Form einer Trägerhülse (3) gestaltet ist.

3. Magnetostriktive Messeinrichtung nach Anspruch 2, dadurch gekennzeichnet, dass die Trägerhülse (3) wenigstens einen zur Achse der Welle (1) parallelen Längsschlitz aufweist.

4. Magnetostriktive Messeinrichtung nach einem der Ansprüche 2 oder 3, dadurch gekennzeichnet, dass die Trägerhülse (3) aus einer Kupferbasislegierung mit etwa 0,3 bis 2 Gew.% Beryllium besteht.

5. Magnetostriktive Messeinrichtung nach einem der Ansprüche 2 bis 4, dadurch gekennzeichnet, dass auf der unmagnetischen Trägerhülse (3) als Magnetmaterial ein Band aus einer hochpermeablen amorphen Metallegierung angeordnet ist.

6. Magnetostriktive Messeinrichtung nach Anspruch 5, dadurch gekennzeichnet, dass das Band aus der amorphen Metallegierung mittels Punktschweissen und/oder mit Hilfe eines Klebemittels auf der Trägerhülse (3) befestigt ist.

7. Magnetostriktive Messeinrichtung nach Anspruch 5 oder 6, dadurch gekennzeichnet, dass das Magnetmaterial (2) eine amorphe Metallegierung auf Kobaltbasis mit einer Sättigungsmagnetostriktion $\lambda_s$ von $-8\cdot10^{-6}$ bis $+8\cdot10^{-6}$ ist.

## Claims

1. A method of measuring a mechanical stress at a shaft (1) by means of a measured-value detector utilising the magnetostrictive properties of a magnetic material (2) arranged on the shaft, where a non-magnetic material (3) is present between the surface of the shaft (1) and the magnetic material (2), characterised in that
– the magnetic material (2) is initially fixed on the surface of a non-magnetic carrier sleeve (3),
– the carrier sleeve (3) with the magnetic material (2) is then fitted onto the shaft (1) and joined to it in force-locked manner.

2. A magnetostrictive measuring device with a measured-value detector at a magnetic material (2) arranged on a shaft (1) where a non-magnetic material (3) is present between the surface of the shaft (1) and the magnetic material (2), characterised in that the non-magnetic material (3) has a smaller modulus of elasticity than the material of the shaft and takes the form of a carrier sleeve (3).

3. A magnetostrictive measuring device as claimed in Claim 2, characterised in that the carrier sleeve (3) has at least one longitudinal slit parallel with the axis of the shaft (1).

4. A magnetostrictive measuring device as claimed in one of Claims 2 or 3, characterised in that the carrier sleeve (3) is made of a copper-based alloy with about 0.3 to 2% by weight of beryllium.

5. A magnetostrictive measuring device as claimed in one of Claims 2 to 4, characterised in that as magnetic material, a strip of a highly permeable amorphous metal alloy is disposed on the non-magnetic carrier sleeve (3).

6. A magnetostrictive measuring device as claimed in Claim 5, characterised in that the strip of the amorphous metal alloy is fixed to the carrier sleeve (3) by means of spot-welding and/or with the aid of an adhesive.

7. A magnetostrictive measuring device as claimed in Claim 5 or 6, characterised in that the magnetic material (2) is an amorphous cobalt-based metal alloy with a saturation magnetostriction $\lambda_s$ of $-8\times10^{-6}$ to $+8\times10^{-6}$.

## Revendications

1. Procédé pour la mesure d'une tension mécanique sur un arbre (1) au moyen d'un capteur, avec utilisation des propriétés magnétostrictives d'un matériau magnétique (2) disposé sur l'arbre, un matériau non magnétique (3) se trouvant entre la surface de l'arbre (1) et le matériau magnétique (2), caractérisé en ce que:
– en premier lieu on fixe le matériau magnétique (2) sur la surface d'un manchon de support non magnétique (3),
– ensuite, on applique le manchon de support (3) avec le matériau magnétique (2) sur l'arbre (1) et on l'assemble avec celui-ci par assemblage en force.

2. Dispositif de mesure magnétostrictif comportant un capteur en un matériau magnétique (2) disposé sur un arbre (1), un matériau non magnétique (3) se trouvant entre la surface de l'arbre (1) et le matériau magnétique (2), caractérisé en ce que le matériau non magnétique (3) présente un module d'élasticité inférieur par rapport au matériau de l'arbre, et a la forme d'un manchon de support (3).

3. Dispositif de mesure magnétostrictif selon la revendication 2, caractérisé en ce que le manchon de support (3) présente au moins une fente longitudinale parallèle à l'axe de l'arbre (1).

4. Dispositif de mesure magnétostrictif selon l'une des revendications 2 ou 3, caractérisé en ce que le manchon de support (3) est constitué d'un alliage à base de cuivre contenant environ 0,3 à 2% en poids de béryllium.

5. Dispositif de mesure magnétostrictif selon l'une quelconque des revendications 2 à 4, caractérisé en ce qu'une bande en un alliage métallique amorphe à haute perméabilité magnétique est disposée en tant que matériau magnétique sur le manchon de support non magnétique (3).

6. Dispositif de mesure magnétostrictif selon la revendication 5, caractérisé en ce que la bande en l'alliage métallique amorphe est fixée sur le manchon de support (3) au moyen de soudure par points et/ou à l'aide d'un adhésif.

7. Dispositif de mesure magnétostrictif selon la revendication 5 ou 6, caractérisé en ce que le matériau magnétique (2) est un alliage magnétique amorphe à base de cobalt, ayant une magnétostriction de saturation $\lambda_s$ de $-8\times10^{-6}$ à $+8\times10^{-6}$.

84P9551

FIG 1

FIG 2